# EUROPÄISCHE PATENTSCHRIFT

(11) **EP 2 549 683 B1**
(45) Veröffentlichungstag und Bekanntmachung des Hinweises auf die Patenterteilung: **11.09.2013**
(21) Anmeldenummer: 12159583.9
(22) Anmeldetag: 15.03.2012
(51) Int. Cl.: H04L 12/24, H04L 12/26, H04L 12/28, H04L 12/40

(54) **Gebäudeinstallationssystem**
Building installation system
Système d'installation de bâtiment

(30) Priorität: 19.07.2011 DE 102011051924
(43) Veröffentlichungstag der Anmeldung: 23.01.2013
(73) Patentinhaber: Insta Elektro GmbH, 58509 Lüdenscheid (DE)
(72) Erfinder: Stecura, Darius, 45731 Waltrop (DE)

(56) Entgegenhaltungen:
- DE-A1-102009 054 527
- GB-A- 2 452 167
- US-A1- 2010 277 300

## Beschreibung

Die vorliegende Erfindung geht von einem gemäß Oberbegriff des Hauptanspruches konzipierten Gebäudeinstallationssystem aus, welches mit einer Vorrichtung zur Ermittlung der beim Kommunizieren empfangenen Signalstärke zwischen beliebigen Teilnehmern, die über ein Funknetzwerk datentechnisch miteinander in Verbindung stehen, ausgerüstet ist.

Derartige Gebäudeinstallationssysteme sind in der Regel dafür vorgesehen, eine Vielzahl von in Gebäuden installierte Teilnehmer (Aktoren, Sensoren) wie zum Beispiel Antriebe, Geräte, Wächter, Zentralsteuereinrichtungen usw. einerseits mit der notwendigen Betriebsspannung zu versorgen und andererseits datentechnisch miteinander zu vernetzen. Dabei ist es bekannt, die datentechnische Vernetzung nicht nur über ein leitungsgebundenes BUS-System sondern auch über ein Funknetzwerk zu bewerkstelligen. Zur Feststellung der Funktionsfähigkeit eines solchen Funknetzwerkes ist es üblich, die Signalstärke zu ermitteln mit welcher beliebige Teilnehmer dieses Funknetzwerkes miteinander kommunizieren.

Durch die GB 2 452 167 A ist ein dem Oberbegriff des Hauptanspruches entsprechendes Gebäudeinstallationssystem bekannt geworden. Dieses Gebäudeinstallationssystem ist mit einer Vorrichtung zur Ermittlung der beim Kommunizieren empfangenen Signalstärke zwischen beliebigen Teilnehmern, die über ein Funknetzwerk datentechnisch in Verbindung stehen, versehen. Zumindest zwei Teilnehmer des Funknetzwerkes weisen einen Adressspeicher zur Speicherung zumindest einer Adresse eines anderen Teilnehmers dieses Funknetzwerkes auf. Zumindest zwei Teilnehmer sind mit einer Messanordnung zur Messung der Signalstärke der von zumindest einem anderen Teilnehmer funktechnisch empfangenen Informationen versehen. Die Messwerte der ermittelten Signalstärke können zur Information des Benutzers über eine Anzeigeeinrichtung zur Anzeige gebracht werden.

Des Weiteren sind durch die DE 102 04 809 A1, DE 20 2004 020 771 U1 US 2010/0277300 A1 und die DE 10 2006 062 190 B3 Gebäudeinstallationssysteme bekannt geworden, bei denen eine Vielzahl von Teilnehmern gegebenenfalls auch über ein Funknetzwerk miteinander kommunizieren können.

Außerdem ist es durch die DE 10 2009 054 527 A1 bei einem Installationssystem bekannt, bei einem Teilnehmer eines Funknetzwerkes ein Display vorzusehen, um Informationen auch über die Qualität der Signalstärke, mit der dieser Teilnehmer mit anderen Teilnehmern kommuniziert, zur Anzeige zu bringen.

Der vorliegenden Erfindung liegt die Aufgabe zugrunde, ein Gebäudeinstallationssystem mit einer solchen Vorrichtung zu schaffen, bei der sich die Ermittlung der Signalstärke, mit der beliebige Teilnehmer in diesem Funknetzwerk miteinander kommunizieren, besonders einfach und mit vergleichsweise wenig Ressourcenaufwand im Microcontroller ermitteln lässt.

Diese Aufgabe wird durch die im Hauptanspruch angegebenen Merkmale gelöst. Bei einem solchermaßen ausgebildeten Installationssystem mit einer derartigen Vorrichtung ist besonders vorteilhaft, dass sich die Signalstärke, mit der alle datentechnisch miteinander verbundenen Teilnehmer miteinander kommunizieren, auf besonders einfache Art und Weise ermitteln lässt, um eventuell vorliegende Reichweitenprobleme zum Beispiel durch den Einsatz von Repeatern abstellen zu können. Einfach ist dabei so zu verstehen, dass einerseits die technische Umsetzung ohne großen Entwicklungsaufwand zu bewerkstelligen ist und andererseits der Anwender (Installateur) die Durchführung der Messung besonders schnell, weil zum großen Teil automatisiert, vornehmen kann.

Weiterhin ist besonders vorteilhaft, dass sich die Ermittlung der Signalstärke von einer zentralen Stelle aus starten lässt und auch die Auswertung an dieser zentralen Stelle zum Beispiel mittels einer Anzeigeeinrichtung vorgenommen werden kann.

Weitere vorteilhafte Ausgestaltungen des erfindungsgemäßen Gegenstandes sind in den Unteransprüchen angegeben. Anhand dreier Ausführungsbeispiele sei der erfindungsgemäße Gegenstand näher beschrieben, dabei zeigen:
- Fig. 1:: ein Blockschaltbild eines ersten Ausführungsbeispiels eines solchen Gebäudeinstallationssystems mit einer derartigen Vorrichtung;
- Fig. 2:: ein Blockschaltbild eines zweiten Ausführungsbeispiels eines solchen Gebäudeinstallationssystems mit einer derartigen Vorrichtung;
- Fig. 3:: ein Blockschaltbild eines dritten Ausführungsbeispiels eines solchen Gebäudeinstallationssystems mit einer derartigen Vorrichtung.

Wie aus den Figuren hervorgeht, besteht ein solches Gebäudeinstallationssystem mit einer Vorrichtung zur Ermittlung der beim Kommunizieren anliegenden Signalstärke zwischen beliebigen Teilnehmern, die über ein Funknetzwerk 1 datentechnisch in Verbindung stehen, hauptsächlich aus mehreren Teilnehmern T1 - Tn, welche jeweils einen Adressspeicher A1 - An zur Speicherung zumindest einer Adresse eines anderen Teilnehmers T1 - Tn dieses Funknetzwerkes aufweisen. Alle Teilnehmer T1 - Tn sind zudem jeweils mit einer Messanordnung M1 - Mn zur Messung der Signalstärke von empfangenen Informationen (Telegrammen) zumindest eines anderen Teilnehmers T1 - Tn versehen und weisen jeweils einen Messwertspeicher MS1 - MSn zur Speicherung dieser gemessenen Signalstärke auf. Zudem ist eine Anzeigeeinrichtung 2 vorgesehen, welche die Messwerte der ermittelten Signalstärke zur Anzeige bringt. Im vorliegenden Fall kommunizieren die Teilnehmer T1 - Tn eines solchen Funknetzwerkes 1 miteinander, indem Informationen bzw. Telegramme funktechnisch gesendet und/oder empfangen werden.

Die Anzeige von Messwerten der Signalstärke kann, wie des weiteren aus den Figuren hervorgeht, direkt durch eine an einem der Teilnehmer T1 - Tn des Funknetzwerkes 1 vorhandene Anzeigeeinrichtung 2 erfolgen, und/oder durch eine Anzeigeeinrichtung 2 vorgenommen werden, die an einem mit dem Funknetzwerk 1 kommunizierenden mobilen Diagnosegerät 3 vorhanden ist und/oder an einer Zentrale Z erfolgen, die zum Beispiel mit einer als Bildschirm ausgeführten Anzeigeeinrichtung 2 ausgerüstet ist. Eine solche Zentrale Z kann zum Beispiel als Personalcomputer ausgeführt sein, der mit einem Funk-Interface 4 ausgerüstet ist.

Üblicherweise sind solche Teilnehmer T1 - Tn, ein solches Diagnosegerät 3 und eine solche Zentrale Z zumindest mit einem Microcontroller ausgerüstet.

Bei dem vorliegenden Gebäudeinstallationssystem mit einer solchen Vorrichtung kann jeder Teilnehmer T1 - Tn die Signalstärke einer funktechnisch empfangenen Information (Telegramm) messen, welche von einem anderen Teilnehmer T1 - Tn gesendet wurde. Um die Signalstärke in dem Funknetzwerk 1 zu ermitteln, muss die Signalstärke zwischen den einzelnen Teilnehmern T1 - Tn gemessen werden. Bei den drei näher beschriebenen Ausführungsbeispielen wird die Signalstärke am ersten Teilnehmer T1 von Telegrammen die vom zweiten Teilnehmer T2 gesendet werden, ermittelt. Hierfür wird beim ersten Teilnehmer T1 zunächst die Adresse vom zweiten Teilnehmer T2 in den ersten Adressspeicher A1 geschrieben und die Messung in der Mess-Steuerung bzw. ersten Messanordnung M1 aktiviert. Der erste Teilnehmer T1 ist nun bereit, die Signalstärke aller Telegramme vom zweiten Teilnehmer T2 zu speichern. Der zweite Teilnehmer T2 wird nun veranlasst, zumindest ein Telegramm zu senden. Dies kann bei unidirektionalen nur sendenden Teilnehmern T1 - Tn manuell erfolgen, zum Beispiel durch den Benutzer oder bei bidirektional arbeitenden Teilnehmern T1 - Tn aus der Ferne durch Auslesen eines bestimmten Parameters. Geeignet ist dazu zum Beispiel ein Broadcast Telegramm zum Lesen der physikalischen Adresse eines bestimmten Teilnehmers mit einer bestimmten Seriennummer. Sobald der erste Teilnehmer T1 ein Telegramm vom zweiten Teilnehmer T2 empfangen hat, wird die Signalstärke des empfangenen Telegramms im ersten Messwertspeicher MS1 des ersten Teilnehmers T1 abgespeichert und für die Anzeige an einer Anzeigeeinrichtung 2 vorbereitet.

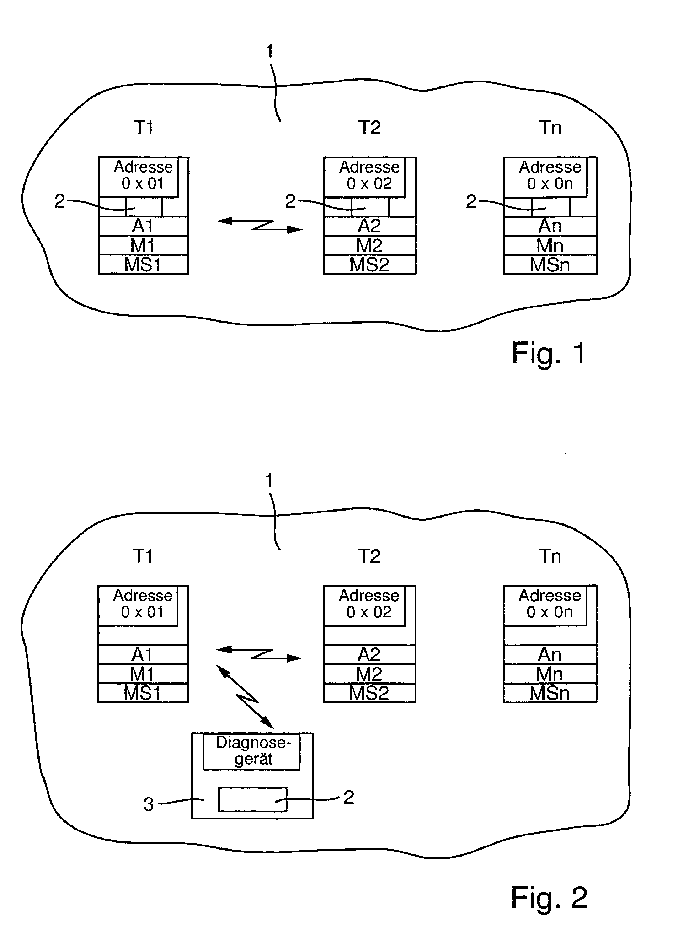

Wie insbesondere aus Figur 1 hervorgeht, weist jeder der Teilnehmer T1 - Tn eine eigene Anzeigeeinrichtung 2 auf. Jede Anzeigeeinrichtung 2 besteht dabei aus zwei LED-Anzeigeelementen, wovon das Eine rotes und das Andere grünes Licht abgibt. Wie vorstehend beschrieben, wird, sobald der erste Teilnehmer T1 ein Telegramm vom zweiten Teilnehmer T2 empfangen hat, die gemessene Signalstärke des empfangenen Telegramms im ersten Messwertspeicher MS1 des ersten Teilnehmers T1 abgespeichert. Beim Abspeichern wird gleichzeitig eine Bewertung vorgenommen, ob die Signalstärke des empfangenen Telegramms für eine sichere Datenübertragung ausreichend ist oder ob es zu Schwierigkeiten kommen kann, weil das Signal zu schwach ist. Durch Aufleuchten des "grünen" LED-Anzeigeelementes der Anzeigeeinrichtung 2 wird signalisiert, dass die Signalstärke ausreicht und durch Aufleuchten des "roten" LED-Anzeigeelementes wird signalisiert, dass die Signalstärke für eine sichere Telegrammübertragung zu schwach ist.

Wie insbesondere aus Figur 2 hervorgeht, ist ein mit dem Funknetzwerk 1 kommunizierendes Diagnosegerät 3 vorgesehen, welches mit einer als Display ausgeführten Anzeigeeinrichtung 2 versehen ist. Wie vorstehend beschrieben, wird, sobald der erste Teilnehmer T1 und das Diagnosegerät 3 ein Telegramm vom zweiten Teilnehmer T2 empfangen haben, die gemessene Signalstärke des empfangenen Telegramms im ersten Messwertspeicher MS1 des ersten Teilnehmers T1 abgespeichert. Der abgespeicherte Messwert der Signalstärke dieses Telegramms wird vom Diagnosegerät 3 ausgelesen, sowie ausgewertet und auf dessen Anzeigeeinrichtung 2 zur Anzeige gebracht. Der Benutzer beziehungsweise der Installateur kann somit auf einfache Art und Weise ablesen, ob die Signalstärke, mit der dieses Telegramm beim ersten Teilnehmer 1 ankommt, ausreicht, um die Funktionssicherheit zu gewährleisten beziehungsweise nicht für eine sichere Telegrammübertragung ausreicht. Selbstverständlich kann diese Auswertung nicht nur für Telegramme vorgenommen werden, die zwischen dem ersten Teilnehmer 1 und dem zweiten Teilnehmer 2 gesendet werden, sondern es besteht die Möglichkeit, diese Auswertung für beliebige Paarungen von Teilnehmern T1 - Tn des Funknetzwerkes 1 an zentraler Stelle vorzunehmen.

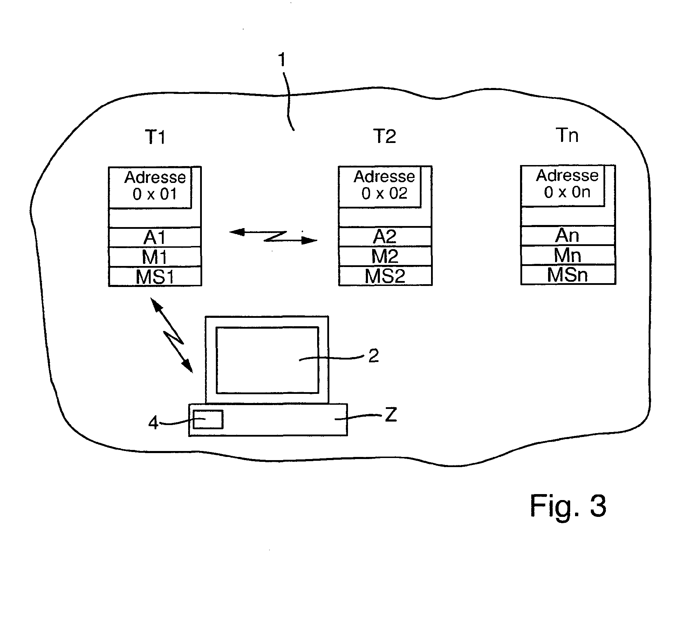

Wie insbesondere aus Figur 3 hervorgeht, ist ein Teilnehmer des Funknetzwerkes als Zentrale Z ausgebildet. Die Zentrale Z ist mit einem Funk-Interface 4 und einer als Bildschirm ausgebildeten Anzeigeeinrichtung 2 versehen. Wie vorstehend beschrieben, wird, sobald der erste Teilnehmer T1 und die Zentrale Z ein Telegramm vom zweiten Teilnehmer T2 empfangen haben, die gemessene Signalstärke des empfangenen Telegramms im ersten Messwertspeicher MS1 des ersten Teilnehmers T1 abgespeichert. Der abgespeicherte Messwert der Signalstärke dieses Telegramms wird von der Zentrale Z ausgelesen, sowie ausgewertet und auf dessen Anzeigeeinrichtung 2 zur Anzeige gebracht. Der Benutzer beziehungsweise der Installateur kann somit auf einfache Art und Weise ablesen, ob die Signalstärke, mit der dieses Telegramm beim ersten Teilnehmer 1 ankommt, ausreicht, um die Funktionssicherheit zu gewährleisten, beziehungsweise nicht für eine sichere Telegrammübertragung ausreicht. Selbstverständlich kann diese Auswertung nicht nur für Telegramme vorgenommen werden, die zwischen dem ersten Teilnehmer 1 und dem zweiten Teilnehmer 2 gesendet werden, sondern es besteht die Möglichkeit, diese Auswertung für beliebige Paarungen von Teilnehmern T1 - Tn des Funknetzwerkes 1 an zentraler Stelle vorzunehmen.

## Patentansprüche

1. Gebäudeinstallationssystem mit einer Vorrichtung zur Ermittlung der beim Kommunizieren empfangenen Signalstärke zwischen beliebigen Teilnehmern (T1 - Tn), die über ein Funknetzwerk datentechnisch in Verbindung stehen, wobei zumindest zwei Teilnehmer (T1 - Tn) des Funknetzwerkes (1) einen Adressspeicher (A1 - An) zur Speicherung zumindest einer Adresse eines anderen Teilnehmers (T1 - Tn) dieses Funknetzwerkes (1) aufweisen und wobei zumindest zwei Teilnehmer (T1 - Tn) mit einer Messanordnung (M1 - Mn) zur Messung der Signalstärke der von zumindest einem anderen Teilnehmer (T1 - Tn) funktechnisch empfangenen Informationen versehen sind und wobei die Messwerte der ermittelten Signalstärke über eine Anzeigeeinrichtung (2) zur Anzeige kommen, **dadurch gekennzeichnet, dass** zumindest zwei Teilnehmer (T1 - Tn) einen Messwertspeicher (MS1 - MSn) zur Speicherung dieser gemessenen Signalstärke aufweisen, und dass sobald ein erster Teilnehmer (T1) ein Telegramm von einem zweiten Teilnehmer (T2) empfangen hat, die gemessene Signalstärke des empfangenen Telegramms im ersten Messwertspeicher (MS1) des ersten Teilnehmers (T1) abgespeichert und beim Abspeichern gleichzeitig eine Bewertung vorgenommen wird, dahingehend ob die Signalstärke des empfangenen Telegramms für eine sichere Datenübertragung ausreichend oder zu schwach ist und dass durch die Anzeigeeinrichtung (2) eine Signalisierung hinsichtlich der bewerteten Signalstärke erfolgt.

2. Gebäudeinstallationssystem nach Anspruch 1, **dadurch gekennzeichnet, dass** die Anzeige von Messwerten der Signalstärke zumindest durch eine Anzeigeeinrichtung (2) erfolgt, die zumindest an einem der Teilnehmer (T1 - Tn) des Funknetzwerkes (1) vorhanden ist.

3. Gebäudeinstallationssystem nach Anspruch 1 oder 2, **dadurch gekennzeichnet, dass** die Anzeige von Messwerten der Signalstärke zumindest durch eine Anzeigeeinrichtung (2) erfolgt, die an einem mit dem Funknetzwerk (1) kommunizierenden Diagnosegerät (3) vorhanden ist.

4. Gebäudeinstallationssystem nach einem der Ansprüche 1 bis 3, **dadurch gekennzeichnet, dass** der ermittelte Messwert der Signalstärke durch eine Anzeigeeinrichtung (2) erfolgt, die zumindest ein LED-Anzeigeelement aufweist.

5. Gebäudeinstallationssystem nach einem der Ansprüche 1 bis 4, **dadurch gekennzeichnet, dass** der ermittelte Messwert der Signalstärke auf einer als Display ausgeführten Anzeigeeinrichtung (2) zur Anzeige gebracht wird.

6. Gebäudeinstallationssystem nach einem der Ansprüche 1 bis 5, **dadurch gekennzeichnet, dass** zumindest ein Teilnehmer (T1 - Tn) als übergeordnete Zentrale (Z) ausgeführt ist, die mit einer als Bildschirm ausgeführten Anzeigeeinrichtung (2) ausgerüstet ist.

7. Gebäudeinstallationssystem nach Anspruch 6, **dadurch gekennzeichnet, dass** die Zentrale (Z) als mit einem Funk-Interface (4) ausgerüsteter Personalcomputer ausgeführt ist.

## Claims

1. Building installation system having a device for determining the signal strength received during communications between arbitrary users (T1 - Tn) which are connected for data-technical purposes by way of a radio network, with at least two users (T1 - Tn) of the radio network (1) having an address memory (A1 - An) for storing at least one address of another user (T1 - Tn) of this radio network (1) and with at least two users (T1 - Tn) being equipped with a measuring arrangement (M1 - Mn) for the purpose of measuring the signal strength of the information received by radio by at least one other user (T1 - Tn), and with the measured values of the determined signal strength being read-out by way of a display device (2), **characterised in that** at least two users (T1 - Tn) have a measured value memory (MS1 - MSn) for storing these measured signal strength and that, once a first user (T1) has received a telegram from a second user (T2), the measured signal strength of the received telegram is saved in the first measured value memory (MS1) of the first user (T1) and that, during storage, an evaluation is simultaneously carried out as to whether the signal strength of the received telegram is sufficient or too weak for a reliable data transmission, and that signalling as regards the evaluated signal strength is conducted by way of the display device (2).

2. Building installation system according to Claim 1, **characterised in that** the read-out of measured values of the signal strength is effected at least by a display device (2) which is provided on one of the users (T1 - Tn) of the radio network (1).

3. Building installation system according to Claim 1 or Claim 2, **characterised in that** the read-out of measured values of the signal strength is effected at least by a display device (2) which is provided on diagnosis equipment (3) that communicates with the radio network (1).

4. Building installation system according to any of Claims 1 to 3, **characterised in that** the read-out of the determined measured value of the signal strength is effected by a display device (2) which has at least one LED display element.

5. Building installation system according to any of Claims 1 to 4, **characterised in that** the determined measured value of the signal strength is read-out on a display device (2) designed as a display.

6. Building installation system according to any of Claims 1 to 5, **characterised in that** at least one user (T1 - Tn) is designed as a superordinate central unit (Z) which is equipped with a display device (2) designed as a screen.

7. Building installation system according to Claim 6, **characterised in that** the central unit (Z) is designed as a personal computer equipped with a radio interface (4).

## Revendications

1. Système d'installation en bâtiment ou d'installation domotique comportant un dispositif de détermination de la puissance du signal reçu, lors de la communication, entre des participants quelconques (T1 - Tn) en relation, sur le plan des données, par l'intermédiaire d'un réseau radio, au moins deux participants (T1 - Tn) du réseau radio (1) présentant une mémoire d'adresses (A1 - An) pour la mémorisation et sauvegarde d'au moins une adresse d'un autre participant (T1 - Tn) de ce réseau radio (1), et au moins deux participants (T1 - Tn) étant munis d'un système de mesure (M1 - Mn) pour la mesure de la puissance de signal des informations reçues par radio par au moins un autre participant (T1 - Tn), et les valeurs mesurées de la puissance de signal déterminée étant affichées par l'intermédiaire d'un dispositif d'affichage (2), **caractérisé en ce que** au moins deux participants (T1 - Tn) présentent une mémoire de valeurs mesurées (MS1 - MSn) pour la mémorisation et sauvegarde de cette puissance de signal mesurée, de sorte que, dès qu'un premier participant (T1) a reçu un télégramme d'un second participant (T2), la puissance de signal mesurée du télégramme reçu est enregistrée dans la première mémoire de valeurs mesurées (MS1) du premier participant (T1) et qu'une évaluation a lieu en même temps que la sauvegarde, déterminant si la puissance du signal du télégramme reçu est suffisante ou trop faible pour une transmission sûre des données, et **en ce que** le dispositif d'affichage (2) procède à une signalisation quant à la puissance du signal évaluée.

2. Système d'installation en bâtiment ou d'installation domotique selon la revendication 1, **caractérisé en ce que** l'affichage de valeurs mesurées de la puissance du signal a lieu par au moins un dispositif d'affichage (2) existant au niveau d'au moins l'un des participants (T1 - Tn) du réseau radio (1).

3. Système d'installation en bâtiment ou d'installation domotique selon l'une des revendications 1 ou 2, **caractérisé en ce que** l'affichage de valeurs mesurées de la puissance du signal a lieu par au moins un dispositif d'affichage (2) existant au niveau d'un appareil de diagnostic (3) communiquant avec le réseau radio (1).

4. Système d'installation en bâtiment ou d'installation domotique selon l'une des revendications 1 à 3, **caractérisé en ce que** l'affichage de la valeur mesurée déterminée de la puissance du signal a lieu par un dispositif d'affichage (2) présentant au moins un élément d'affichage LED.

5. Système d'installation en bâtiment ou d'installation domotique selon l'une des revendications 1 à 4, **caractérisé en ce que** la valeur mesurée déterminée de la puissance du signal est affichée sur un dispositif d'affichage (2) réalisé sous forme d'écran.

6. Système d'installation en bâtiment ou d'installation domotique selon l'une des revendications 1 à 5, **caractérisé en ce que** au moins un participant (T1 -Tn) est réalisé sous forme de centrale (Z) de hiérarchie supérieure, équipée d'un dispositif d'affichage (2) réalisée sous forme d'écran.

7. Système d'installation en bâtiment ou d'installation domotique selon la revendication 6, **caractérisé en ce que** la centrale (Z) est réalisée sous forme d'un micro-ordinateur équipé d'une interface radio (4).
